# FASCICULE DE BREVET EUROPEEN

(11) **EP 3 237 227 B1**
(45) Date de publication et mention de la délivrance du brevet: **27.03.2019**
(21) Numéro de dépôt: 15821071.6
(22) Date de dépôt: 21.12.2015
(51) Int. Cl.: B60C 1/00, C08K 5/103, C08K 5/14

(54) **PNEUMATIQUE COMPRENANT UNE COMPOSITION COMPRENANT UN DERIVE D'ACRYLATE POLYFONCTIONNEL ET UN PEROXYDE**
REIFEN MIT EINER ZUSAMMENSETZUNG MIT EINEM POLYFUNKTIONALEN AKRYLATDERIVAT UND EINEM PEROXID
TYRE COMPRISING A COMPOSITION COMPRISING A POLYFUNCTIONAL ACRYLATE DERIVATIVE AND A PEROXIDE

(30) Priorité: 22.12.2014 FR 1463045
(43) Date de publication de la demande: 01.11.2017
(73) Titulaire: Compagnie Générale des Etablissements Michelin, 63000 Clermont-Ferrand (FR)
(72) Inventeur: NAYRAT, Delphine, 63040 Clermont-Ferrand Cedex 9 (FR)
(74) Mandataire: Wroblewski, Nicolas Paul André
(86) Numéro de dépôt international: PCT/EP2015/080817
(87) Numéro de publication internationale: WO 2016/102480

(56) Documents cités:
- EP-A1- 1 552 965
- GB-A- 2 360 784
- US-A1- 2003 065 076

## Description

L'invention est relative aux pneumatiques et plus particulièrement à ceux comprenant une composition qui comprend un dérivé d'acrylate polyfonctionnel et un peroxyde.

Des compositions comprenant des dérivés de diacrylate de zinc sont décrites dans certains documents de l'état de l'art, pour des objets qui ne sont pas des pneumatiques. Par exemple, le document US 2003/0065076 décrit des compositions pour chenilles de tank militaire, comprenant un élastomère, une charge renforçante, du diacrylate de zinc ou du diméthacrylate de zinc, et un peroxyde ; avec pour effet une amélioration de la résistance à l'abrasion.

De même, le document US 2005/0084638 décrit des compositions de mélanges de recouvrement d'un manchon à air pour suspensions, comprenant également un élastomère, une charge renforçante, du diacrylate de zinc et un peroxyde.

Dans le domaine spécifique des pneumatiques, depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. Cette contrainte, vraie dans toutes les compositions de pneumatique, est particulièrement forte pour les bandes de roulement de pneumatique. Les manufacturiers ont développé des compositions de pneumatique permettant de diminuer cette résistance au roulement, de diverse façon et notamment par l'introduction de silice dans les mélanges comme charge renforçante.

Néanmoins, les manufacturiers cherchent toujours des solutions pour baisser encore la résistance au roulement des bandes de roulement de pneumatiques et c'est dans ce cadre que les demanderesses ont découvert de façon surprenante que l'hystérèse pouvait être nettement diminuée dans des compositions de caoutchouc pour pneumatique, avec un taux de charge renforçante réduit, la composition comprenant un dérivé d'acrylate polyfonctionnel et un peroxyde, à condition d'adopter un rapport entre le taux de peroxyde et le taux de dérivé d'acrylate polyfonctionnel adapté.

Par ailleurs, cette solution présente de nombreux autres avantages par rapport aux compositions de l'art antérieur et notamment une résistance au vieillissement améliorée en conditions thermiques et thermo-oxydantes.

L'invention concerne donc un pneumatique comprenant une composition de caoutchouc à base d'au moins un élastomère diénique, une charge renforçante, un dérivé d'acrylate polyfonctionnel de formule (Ia) ou (Ib) 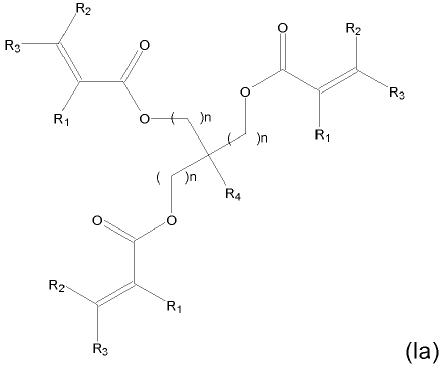 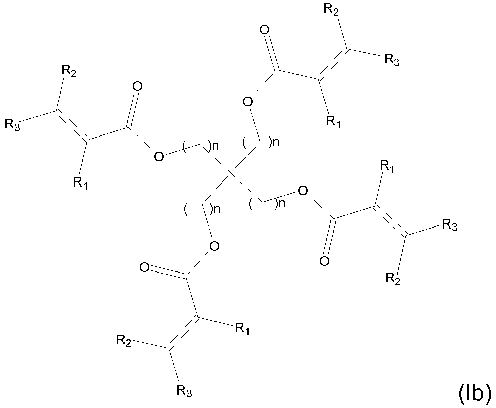 dans laquelle R1, R2 et R3 représentent indépendamment un atome d'hydrogène ou un groupe hydrocarboné en C1-C7 choisi dans le groupe constitué par les alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, n représente un nombre entier de valeur 1, 2 ou 3, et dans le cas d'un dérivé d'acrylate polyfonctionnel de formule (la), R4 représente un radical choisi dans le groupe constitué par un atome d'hydrogène, un groupement méthyle, un groupement éthyle, un groupement propyle ou un groupement isopropyle,
ladite composition comprenant en outre un peroxyde, les taux de dérivé d'acrylate polyfonctionnel et de peroxyde étant tels que le rapport du taux de dérivé d'acrylate polyfonctionnel sur le taux de peroxyde est supérieur ou égal à 6.

De préférence, l'invention concerne un pneumatique tel que défini ci-dessus, dans lequel R1, R2 et R3 représentent indépendamment un atome d'hydrogène ou un groupe méthyle. Préférentiellement, R2 et R3 représentent chacun un atome d'hydrogène. Préférentiellement également, R1 représente un groupe méthyle. De manière préférentielle, n représente le nombre entier 1.

Selon un mode de réalisation préférentiel, l'invention concerne un pneumatique tel que défini ci-dessus, dans lequel le dérivé d'acrylate polyfonctionnel est un composé de formule (la). De préférence, R4 représente un groupement éthyle.

Selon un autre mode de réalisation préférentiel, l'invention concerne un pneumatique tel que défini ci-dessus, dans lequel le dérivé d'acrylate polyfonctionnel est un composé de formule (Ib).

De préférence, l'invention concerne un pneumatique tel que défini ci-dessus, dans lequel la quantité de dérivé d'acrylate polyfonctionnel dans la composition est comprise dans un domaine allant de 10 à 70 pce (parties en poids pour cent parties en poids d'élastomère), de préférence de 10 à 60 pce.

Préférentiellement, l'invention concerne un pneumatique tel que défini ci-dessus, dans lequel le peroxyde dans la composition est un peroxyde organique. De préférence, la quantité de peroxyde dans la composition est inférieure ou égale à 3 pce. Plus préférentiellement, la quantité de peroxyde dans la composition est comprise dans un domaine allant de 0,1 à 3 pce. De manière préférentielle, la quantité de peroxyde dans la composition est comprise dans un domaine allant de 0,2 à 2 pce, de préférence de 0,25 à 1 pce.

De manière préférentielle, l'invention concerne un pneumatique tel que défini ci-dessus, dans lequel le rapport du taux de dérivé d'acrylate polyfonctionnel sur le taux de peroxyde est supérieur ou égal à 7, de préférence supérieur ou égal à 8 et plus préférentiellement supérieur ou égal à 10. Plus préférentiellement, le rapport du taux de dérivé d'acrylate polyfonctionnel sur le taux de peroxyde est compris entre 10 et 110, de préférence compris entre 10 et 70, et plus préférentiellement entre 10 et 40.

De préférence, l'invention concerne un pneumatique tel que défini ci-dessus, dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. De préférence, l'élastomère diénique est choisi dans le groupe constitué par les polybutadiènes, les polyisoprènes de synthèse, le caoutchouc naturel, les copolymères de butadiène et de styrène, les copolymères de butadiène et d'acrylonitrile, les copolymères d'isoprène et de styrène et les mélanges de ces élastomères.

De préférence également, l'invention concerne un pneumatique tel que défini ci-dessus, dans lequel la composition comprend moins de 50 pce de charge renforçante. Préférentiellement, le taux de charge renforçante est compris dans un domaine allant de 5 à 45 pce. Plus préférentiellement, le taux de charge renforçante est compris dans un domaine allant de 10 à 40 pce, de préférence de 15 à 35 pce. De manière préférentielle, la charge renforçante est du noir de carbone, de la silice ou un mélange de ces derniers. Préférentiellement, la charge renforçante est majoritairement constituée de noir de carbone. Alternativement et préférentiellement également, la charge renforçante est majoritairement constituée de silice.

De manière préférentielle, l'invention concerne un pneumatique tel que défini ci-dessus, dans lequel le rapport du taux de charge et du taux de dérivé d'acrylate polyfonctionnel est inférieur ou égal à 3,5 ; de préférence inférieur ou égal à 3. De préférence, le rapport du taux de charge et du taux de dérivé d'acrylate polyfonctionnel est compris dans un domaine allant de 0,3 à 3 ; de préférence de 1 à 3.

De préférence, l'invention concerne un pneumatique tel que défini ci-dessus, dans lequel la composition ne contient pas de soufre moléculaire ou d'agent donneur de soufre en tant qu'agent de vulcanisation ou en contient moins de 0,5 pce. De préférence, la composition ne contient pas de soufre moléculaire ou d'agent donneur de soufre en tant qu'agent de vulcanisation ou en contient moins de 0,3 pce et de préférence moins de 0,1 pce.

Préférentiellement, l'invention concerne un pneumatique tel que défini ci-dessus, dans lequel la composition ne contient pas d'accélérateur de vulcanisation. Préférentiellement également, la composition ne contient pas d'agent antioxydant.

Préférentiellement également, l'invention concerne un pneumatique tel que défini ci-dessus, dans lequel la composition comprend en outre un plastifiant, de préférence choisi parmi les résines plastifiantes, les huiles d'extension et leurs mélanges.

De préférence, l'invention concerne un pneumatique tel que défini ci-dessus, dans lequel la composition telle que précisée ci-dessus est celle de la bande de roulement, ou d'une couche interne dudit pneumatique.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition de pneumatique

La composition de caoutchouc de pneumatique selon l'invention est à base des constituants suivants : un dérivé d'acrylate polyfonctionnel de formule (I) et un peroxyde, les taux de dérivé d'acrylate polyfonctionnel et de peroxyde étant tels que le rapport du taux de dérivé d'acrylate polyfonctionnel sur le taux de peroxyde est supérieur ou égal à 6.

Dans la présente demande, l'expression « pce » (« phr » en anglais) signifie de manière connue parties en poids pour cent parties en poids d'élastomère. On exprime ainsi la quantité en poids des constituants des compositions par rapport à la quantité totale d'élastomères en poids considérée par convention à la valeur cent.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Au sens de la présente invention et de manière connue de l'homme de l'art, on entend par bande de roulement la couche du pneumatique qui est en contact avec la surface de roulement. En effet, il est possible de définir au sein du pneumatique trois types de zones :
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.
- La zone radialement intérieure et en contact avec le gaz de gonflage, cette zone étant généralement constituée par la couche étanche aux gaz de gonflage, parfois appelée gomme intérieure (« inner liner » en anglais).
- La zone radialement extérieure et en contact avec l'air ambiant, cette zone étant essentiellement constituée de la bande de roulement et du flanc externe du pneumatique. La bande de roulement du pneumatique est disposée radialement au-dessus de la ceinture de pneumatique et constitue donc la couche en contact avec la surface de roulement.

### 1-1 Elastomère diénique

Les compositions de pneumatique de l'invention peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions de pneumatique selon l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Dans le cas d'un élastomère NBR, on utilise notamment un NBR ayant une teneur en acrylonitrile comprise entre 15% et 40% en poids, une teneur en liaisons vinyliques de la partie butadiénique comprise entre 15% et 70%, une teneur (% molaire) en liaisons trans-1,4 comprise entre 15% et 75%.

Selon un mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### I-2 Dérivé d'acrylate polyfonctionnel

Le pneumatique selon l'invention comprend une composition qui comprend un dérivé d'acrylate polyfonctionnel de formule (la) ou (Ib) 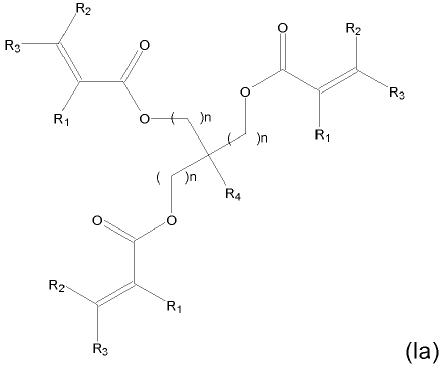 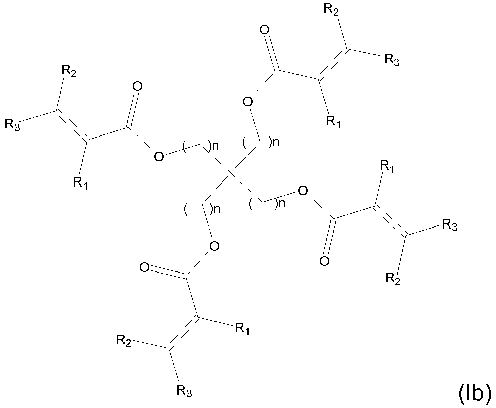 dans laquelle R1, R2 et R3 représentent indépendamment un atome d'hydrogène ou un groupe hydrocarboné en C1-C7 choisi dans le groupe constitué par les alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, n représente un nombre entier de valeur 1, 2 ou 3, et dans le cas d'un dérivé d'acrylate polyfonctionnel de formule (la), R4 représente un radical choisi dans le groupe constitué par un atome d'hydrogène, un groupement méthyle, un groupement éthyle, un groupement propyle ou un groupement isopropyle.

Par groupe alkyle cyclique, on entend un groupe alkyle comprenant un ou plusieurs cycles.

Par groupe ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Le ou les hétéroatomes peuvent être un atome d'azote, de soufre ou d'oxygène.

Préférentiellement dans les formules (la) et (Ib) ci-dessus, R1, R2 et R3 représentent indépendamment un atome d'hydrogène ou un groupe méthyle. Plus préférentiellement, R2 et R3 représentent chacun un atome d'hydrogène et selon une alternative également très préférentielle R1 représente un groupe méthyle.

Préférentiellement, n est égal à 1 dans les formules (la) et (Ib) ci-dessus.

Préférentiellement, dans le cas d'un dérivé d'acrylate polyfonctionnel de formule (la), R4 représente un groupement éthyle.

Dans la composition de pneumatique selon l'invention, la quantité de dérivé d'acrylate polyfonctionnel est de préférence comprise dans un domaine allant de 10 à 70 pce, de préférence de 10 à 60 pce. Au-delà d'un taux de 70 pce la dispersion est moins bonne et les propriétés de la composition peuvent se dégrader tandis qu'en deçà d'un taux de 10 pce, l'effet du dérivé d'acrylate polyfonctionnel est moins notable sur la rigidification et le renforcement.

A titre d'exemple, on trouve dans le commerce des dérivés d'acrylate polyfonctionnel tels que le triméthylolpropane triméthacrylate (TMPTMA) « SR351 » de la société SARTOMER.

### I-3 Peroxyde

En plus de l'élastomère diénique et du dérivé d'acrylate polyfonctionnel précédemment décrits, la composition de pneumatique de l'invention utilise un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques, et en particulier un peroxyde choisi parmi le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et les mélanges de ces derniers.

Il existe dans le commerce divers produits conditionnes, connus sous leurs marques de fabrique; on peut citer:-le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. En effet, en dessous d'une quantité de 0,1 pce, l'effet du peroxyde n'est pas notable tandis qu'au-delà de 3 pce, les propriétés d'allongement rupture et donc de résistance de la composition sont diminuées. Plus préférentiellement, la quantité de peroxyde dans la composition est comprise dans un domaine allant de 0,2 à 2 pce, de préférence de 0,25 à 1 pce.

Quelles que soient les quantités de dérivé d'acrylate polyfonctionnel et de peroxyde vues ci-dessus, il est important pour l'invention que le rapport du taux de dérivé d'acrylate polyfonctionnel sur le taux de peroxyde soit supérieur ou égal à 6. En-deçà, d'un tel rapport des taux la synergie entre le dérivé d'acrylate polyfonctionnel et le peroxyde n'est pas aussi performante en termes d'effet sur la rhéométrie et sur l'allongement rupture, en particulier pour une composition soumise aux contraintes d'un pneumatique.

De préférence, le rapport du taux de dérivé d'acrylate polyfonctionnel sur le taux de peroxyde est supérieur ou égal à 7, de préférence supérieur ou égal à 8 et plus préférentiellement supérieur ou égal à 10. Plus préférentiellement, le rapport du taux de dérivé d'acrylate polyfonctionnel sur le taux de peroxyde est compris entre 10 et 110, de préférence compris entre 10 et 70, et plus préférentiellement entre 10 et 40.

### I-4 Charge renforçante

La composition de pneumatique selon l'invention comprend également une charge renforçante.

L'état physique sous lequel se présente la charge renforçante est indifférent, que ce soit sous forme de poudre, de microperles, de granulés, de billes ou toute autre forme densifiée appropriée.

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut également contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m²/g, plus préférentiellement comprise entre 60 et 300 m²/g.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

La fraction volumique de charge renforçante dans la composition de caoutchouc est définie comme étant le rapport du volume de la charge renforçante sur le volume de l'ensemble des constituants de la composition, étant entendu que le volume de l'ensemble des constituants est calculé en additionnant le volume de chacun des constituants de la composition. La fraction volumique de charge renforçante dans une composition est donc définie comme le rapport du volume de la charge renforçante sur la somme des volumes de chacun des constituants de la composition, et de préférence, cette fraction volumique est comprise entre 5 % et 20 %, préférentiellement entre 5 % et 15%. D'une manière préférentielle équivalente, le taux de charge renforçante totale (noir de carbone et/ou silice) est de moins de 50 pce, de préférence de 5 à 45 pce, plus préférentiellement de 10 à 40 pce et de manière très préférentielle, de 15 à 35 pce.

En effet, un avantage de l'invention est de permettre de réduire le taux de charge renforçante sans perdre en performance. Au-delà d'un taux de 50 pce, cet avantage n'est plus aussi grand et l'hystérèse de la composition augmente.

Ainsi, de préférence, le rapport du taux de charge et du taux de dérivé d'acrylate polyfonctionnel est inférieur ou égal à 3,5 ; de préférence inférieur ou égal à 3. Plus préférentiellement, ce rapport est compris dans un domaine allant de 0,3 à 3, de préférence de 1 à 3.

De préférence, la composition de pneumatique selon l'invention comprend du noir de carbone à titre majoritaire comme charge renforçante. Alternativement et préférentiellement également, la composition de pneumatique selon l'invention comprend de la silice à titre majoritaire comme charge renforçante. Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Ces compositions peuvent optionnellement également contenir en complément des charges renforçantes, et en particulier lorsque de la silice est utilisée dans la composition de pneumatique selon l'invention, des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

A titre d'agent de couplage, on utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 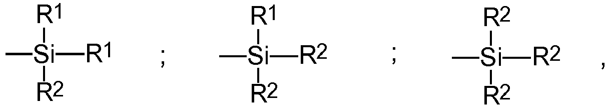 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (II) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc utiles à l'invention, la teneur en agent de couplage est préférentiellement comprise entre 1 et 5 pce, plus préférentiellement entre 1 et 4 et encore plus préférentiellement entre 1 et 3,5 pce.

### I-5 Système de vulcanisation

La composition de pneumatique selon l'invention ne nécessite pas de système de vulcanisation, ce qui est l'un de ses avantages puisque cela permet de simplifier la formule, et la préparation de la composition. Si cependant un système de vulcanisation est présent dans la composition, il l'est préférablement dans des quantités faibles explicitées plus bas.

Le système de vulcanisation proprement dit est habituellement à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre moléculaire (ou de manière équivalente les agents donneurs de soufre moléculaire), lorsqu'il est utilisé, l'est à un taux préférentiellement inférieur à 0,5 pce, de préférence inférieur à 0,3 pce, plus préférentiellement à un taux inférieur à 0,1 pce. De manière très préférentielle, la composition est dépourvue de soufre moléculaire.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Si un accélérateur est utilisé, il l'est à des taux tels que ceux pratiqués par l'homme du métier des compositions vulcanisées pour pneumatique. Néanmoins, la composition de pneumatique selon l'invention est préférentiellement dépourvue de tout accélérateur de vulcanisation.

### I-6 Autres additifs possibles

Les compositions de pneumatique conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Selon un mode préférentiel, la composition de pneumatique de l'invention est dépourvue d'agent anti-oxydant.

Selon un mode préférentiel, la composition de pneumatique de l'invention est dépourvue d'agent plastifiant. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

Lorsqu'il est inclus dans la composition, le taux d'agent plastifiant total est préférentiellement supérieur ou égal à 5 pce, plus préférentiellement de 5 à 100 pce, en particulier de 10 à 80 pce, par exemple de 15 à 70 pce.

Selon un premier mode de réalisation préférentiel de l'invention, le plastifiant est une huile d'extension liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (*Medium Extracted Solvates*), les huiles TDAE (*Treated Distillate Aromatic Extracts*), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un autre mode de réalisation préférentiel de l'invention, cet agent plastifiant est une résine hydrocarbonée thermoplastique dont la Tg est supérieure à 0°C, de préférence supérieure à 20°C. Cette résine est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).
Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
• résines polylimonène : par la société DRT sous la dénomination "Dercolyte L120" (Mn=625 g/mol ; Mw=1010 g/mol ; lp=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
• résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
• résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Il va de soi que l'invention concerne les pneumatiques munis des bandes de roulement comprenant les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation et notamment le peroxyde des compositions selon l'invention; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères et les charges renforçantes (et éventuellement les agents de couplage et/ou d'autres ingrédients), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation et notamment du peroxyde durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation et notamment le peroxyde, à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels que flancs, nappe carcasse, nappes sommet (ou ceinture de pneumatique), bande de roulement, bourrage tringle, sous-couche de bande de roulement ou d'autres couches d'élastomères, préférentiellement la bande de roulement. Ces produits peuvent ensuite être utilisés pour la fabrication de pneumatiques, selon les techniques connues de l'homme du métier.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

Les exemples qui suivent illustrent l'invention sans toutefois la limiter.

Les compositions telles que décrites dans la présente demande peuvent être utilisées n'importe où dans le pneumatique, et de manière préférentielle dans sa bande de roulement ou dans une couche interne de ce pneumatique. En effet, il est possible de définir au sein du pneumatique trois types de zones :
- La zone radialement extérieure et en contact avec l'air ambiant, cette zone étant essentiellement constituée de la bande de roulement et du flanc externe du pneumatique.
- La zone radialement intérieure et en contact avec le gaz de gonflage, cette zone étant généralement constituée par la couche étanche aux gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes de pneumatiques. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### Propriétés dynamiques (après cuisson): Essai de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement M50, M100 et M300.

On mesure également les contraintes à la rupture (en MPa) et les allongements à la rupture (AR en %), à 23°C ± 2°C, selon la norme NF T 46-002. Les résultats sont exprimés « en base 100 » c'est à dire par rapport au témoin auquel une valeur 100 est attribuée.

Toutes ces mesures de traction sont effectuées dans les conditions normales de température (23±2°C) et d'hygrométrie (50±5% d'humidité relative), selon la norme française NF T 40-101 (décembre 1979).

Les propriétés dynamiques G*(10%) et tan(δ)max à 40°C sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 40°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 40°C.

On rappelle que, de manière bien connue de l'homme du métier, la valeur de tan(δ)max à 40°C est représentative de l'hystérèse du matériau donc de la résistance au roulement : plus tan(δ)max à 40°C est faible, plus la résistance au roulement est réduite.

### III-3 Exemples

### III-3-1 Exemple I

Cet exemple a pour objet de comparer les propriétés de caoutchouterie de compositions témoin à des compositions conformes à l'invention, chargées en noir de carbone. Les compositions testées sont présentées dans le tableau 1 ci-dessous.

**Tableau 1**

| | **T1** | **T2** | **T3** | **T4** | **T5** | **T6** | **C1** | **C2** |
|---|---|---|---|---|---|---|---|---|
| NR (1) | 100 | 100 | 100 | 100 | 100 | 100 | 100 | 100 |
| Noir (2) | 50 | 50 | 0 | 20 | 40 | 0 | 20 | 40 |
| TMPTMA (3) | - | 5 | - | - | - | 17 | 17 | 17 |
| Peroxyde (4) | - | 3 | 1,5 | 1,5 | 1,5 | 1,5 | 1,5 | 1,5 |
| TMPTMA/Péroxyde | - | 1,7 | - | - | - | 11,3 | 11,3 | 11,3 |
| charge/TMPTMA | - | 10,0 | - | - | - | 0,0 | 1,2 | 2,4 |
| Acide stéarique (5) | 0,5 | 0,5 | 0,5 | 0,5 | 0,5 | 0,5 | 0,5 | 0,5 |
| ZnO (6) | 7 | 7 | 7 | 7 | 7 | 7 | 7 | 7 |
| 6-PPD (7) | 1,5 | - | - | - | - | - | - | - |
| Accélérateur (8) | 0,8 | - | - | - | - | - | - | - |
| Soufre | 4,5 | - | - | - | - | - | - | - |

| | | | | | | | | |
|---|---|---|---|---|---|---|---|---|
| (1) Caoutchouc Naturel (2) Noir de carbone grade ASTM N326 de la société Cabot (3) Triméthylolpropane triméthacrylate (TMPTMA) « SR351 » de la société SARTOMER (4) Peroxyde de dicumyl « Dicup » de la société Hercules (5) Stéarine « Pristerene 4931 » de la société Uniqema (6) Oxyde de zinc grade industriel - société Umicore (7) N-(1,3-diméthylbutyl)-N'-phényl-p-phénylènediamine « Santoflex 6-PPD » de la société Flexsys (8) N-dicyclohexyl-2-benzothiazol-sulfénamide "Santocure DCBS" de la société Flexsys | | | | | | | | |

Le tableau 2 ci-dessous donne les propriétés mesurées pour les différentes compositions.

**Tableau 2**

| | **T1** | **T2** | **T3** | **T4** | **T5** | **T6** | **C1** | **C2** |
|---|---|---|---|---|---|---|---|---|
| AR (%) | 480 | 200 | 380 | 310 | 305 | 210 | 330 | 320 |
| M300 | 11 | / | 2 | 6 | 11 | / | 11 | 14,5 |
| Tg(delta) max à 40°C | 0,19 | 0,18 | 0,06 | 0,11 | 0,15 | 0,07 | 0,13 | 0,16 |

Par rapport aux compositions témoin, on note que la composition C1 est au même niveau de renforcement (représenté par M300) que les compositions témoins T1 et T5 mais avec une hystérèse fortement diminuée. La composition C3 permet d'atteindre un niveau élevé de renforcement (M300) tout en conservant une faible hystérèse et une bonne cohésion (représentée par l'allongement rupture).

### III-3-2 Exemple II

Cet exemple a pour objet de comparer les propriétés de caoutchouterie de compositions témoin à des compositions conformes à l'invention, chargées en silice. Les compositions testées sont présentées dans le tableau 3 ci-dessous.

**Tableau 3**

| | **T7** | **T8** | **T9** | **T10** | **T11** | **C3** | **C4** |
|---|---|---|---|---|---|---|---|
| NR (1) | 100 | 100 | 100 | 100 | 100 | 100 | 100 |
| Silice (2) | 50 | 0 | 20 | 40 | 0 | 20 | 40 |
| TMPTMA (3) | 5 | - | - | - | 17 | 17 | 17 |
| Peroxyde (4) | 3 | 1,5 | 1,5 | 1,5 | 1,5 | 1,5 | 1,5 |
| TMPTMA/Péroxyde | 1,7 | - | - | - | 11,3 | 11,3 | 11,3 |
| charge/TMPTMA | 10,0 | - | - | - | 0,0 | 1,2 | 2,4 |
| Acide stéarique (5) | 0,5 | 0,5 | 0,5 | 0,5 | 0,5 | 0,5 | 0,5 |
| ZnO (6) | 7 | 7 | 7 | 7 | 7 | 7 | 7 |
| Agent couplage (7) | 4 | - | 1,6 | 3,2 | - | 1,6 | 3,2 |

| | | | | | | | |
|---|---|---|---|---|---|---|---|
| (1) Caoutchouc Naturel (2) Silice 160 MP, « Zeosil 1165MP » de la société Rhodia (3) Triméthylolpropane triméthacrylate (TMPTMA) « SR351 » de la société SARTOMER (4) Peroxyde de dicumyl « Dicup » de la société Hercules (5) Stéarine « Pristerene 4931 » de la société Uniqema (6) Oxyde de zinc grade industriel - société Umicore (7) Agent de couplage TESPT « Si69 » de la société Evonik | | | | | | | |

Le tableau 4 ci-dessous donne les propriétés mesurées pour les différentes compositions.

**Tableau 4**

| | **T7** | **T8** | **T9** | **T10** | **T11** | **C3** | **C4** |
|---|---|---|---|---|---|---|---|
| AR (%) | 230 | 390 | 320 | 310 | 200 | 400 | 460 |
| M300 | / | 1,3 | 3,5 | 6 | / | 9 | 13,5 |
| Tg(delta) max à 40°C | 0,17 | 0,05 | 0,07 | 0,09 | 0,05 | 0,07 | 0,18 |

Par rapport aux compositions témoin, on note que les compositions C3 et C4 permettent d'atteindre un fort renforcement (M300) avec une faible hystérèse et en conservant une bonne cohésion (allongement rupture).

## Revendications

1. Pneumatique comprenant une composition de caoutchouc à base d'au moins un élastomère diénique, une charge renforçante, un dérivé d'acrylate polyfonctionnel de formule (la) ou (Ib) 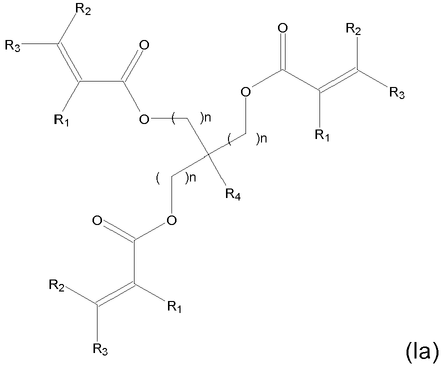 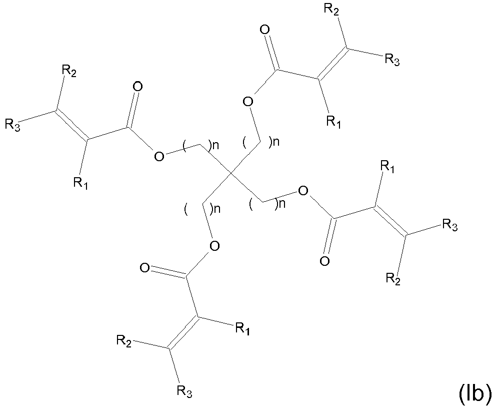 dans laquelle R1, R2 et R3 représentent indépendamment un atome d'hydrogène ou un groupe hydrocarboné en C1-C7 choisi dans le groupe constitué par les alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, n représente un nombre entier de valeur 1, 2 ou 3, et dans le cas d'un dérivé d'acrylate polyfonctionnel de formule (la), R4 représente un radical choisi dans le groupe constitué par un atome d'hydrogène, un groupement méthyle, un groupement éthyle, un groupement propyle ou un groupement isopropyle,
ladite composition comprenant en outre un peroxyde, les taux de dérivé d'acrylate polyfonctionnel et de peroxyde étant tels que le rapport du taux de dérivé d'acrylate polyfonctionnel sur le taux de peroxyde est supérieur ou égal à 6.

2. Pneumatique selon la revendication 1, dans lequel R1, R2 et R3 représentent indépendamment un atome d'hydrogène ou un groupe méthyle.

3. Pneumatique selon l'une quelconque des revendications précédentes, dans lequel n représente le nombre entier 1.

4. Pneumatique selon l'une quelconque des revendications précédentes, dans lequel le dérivé d'acrylate polyfonctionnel est un composé de formule (la).

5. Pneumatique selon la revendication 4, dans lequel R4 représente un groupement éthyle.

6. Pneumatique selon l'une quelconque des revendications précédentes, dans lequel la quantité de dérivé d'acrylate polyfonctionnel dans la composition est comprise dans un domaine allant de 10 à 70 pce (parties en poids pour cent parties en poids d'élastomère), de préférence de 10 à 60 pce.

7. Pneumatique selon l'une quelconque des revendications précédentes, dans lequel la quantité de peroxyde dans la composition est inférieure ou égale à 3 pce.

8. Pneumatique selon l'une quelconque des revendications précédentes, dans lequel le rapport du taux de dérivé d'acrylate polyfonctionnel sur le taux de peroxyde est supérieur ou égal à 7, de préférence supérieur ou égal à 8 et plus préférentiellement supérieur ou égal à 10.

9. Pneumatique selon l'une quelconque des revendications précédentes dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

10. Pneumatique selon l'une quelconque des revendications précédentes, dans lequel la composition comprend moins de 50 pce de charge renforçante.

11. Pneumatique selon l'une quelconque des revendications précédentes dans lequel la charge renforçante est du noir de carbone, de la silice ou un mélange de ces derniers.

12. Pneumatique selon l'une quelconque des revendications précédentes dans lequel le rapport du taux de charge et du taux de dérivé d'acrylate polyfonctionnel est inférieur ou égal à 3,5 ; de préférence inférieur ou égal à 3.

13. Pneumatique selon l'une quelconque des revendications précédentes dans lequel la composition ne contient pas de soufre moléculaire ou d'agent donneur de soufre en tant qu'agent de vulcanisation ou en contient moins de 0,5 pce.

14. Pneumatique selon l'une des revendications précédentes dans lequel la composition comprend en outre un plastifiant, de préférence choisi parmi les résines plastifiantes, les huiles d'extension et leurs mélanges.

15. Pneumatique selon l'une des revendications précédentes dans lequel la composition telle que précisée dans les revendications 1 à 14 est celle de la bande de roulement, ou d'une couche interne dudit pneumatique.

## Patentansprüche

1. Reifen, umfassend eine Kautschukzusammensetzung auf Basis von mindestens einem Dienelastomer, einem verstärkenden Füllstoff und einem polyfunktionellen Acrylatderivat der Formel (la) oder (Ib) 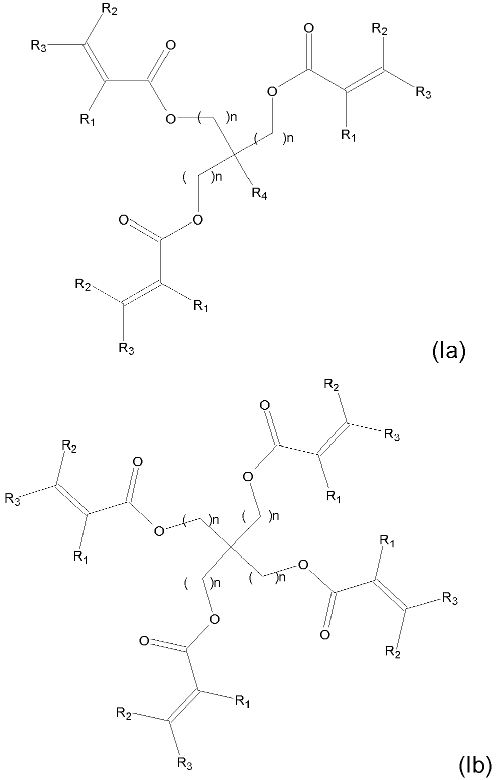 in der R₁, R₂ und R₃ unabhängig für ein Wasserstoffatom oder eine C₁-C₇-Kohlenwasserstoffgruppe aus der Gruppe bestehend aus linearen, verzweigten oder cyclischen Alkylgruppen, Aralkylgruppen, Alkylarylgruppen und Arylgruppen stehen und gegebenenfalls durch ein oder mehrere Heteroatome unterbrochen sind, wobei R₂ und R₃ zusammen einen nichtaromatischen Ring bilden können, n für eine ganze Zahl mit einem Wert von 1, 2 oder 3 steht und im Fall eines polyfunktionellen Acrylatdrivats der Formel (la) R₄ für einen Rest aus der Gruppe bestehend aus einem Wasserstoffatom, einer Methylgruppe, einer Ethylgruppe, einer Propylgruppe oder einer Isopropylgruppe steht,
wobei die Zusammensetzung außerdem ein Peroxid umfasst, wobei die Gehalte an polyfunktionellem Acrylatderivat und Peroxid so beschaffen sind, dass das Verhältnis des Gehalts an polyfunktionellem Acrylatderivat zum Gehalt an Peroxid größer oder gleich 6 ist.

2. Reifen nach Anspruch 1, wobei R₁, R₂ und R₃ unabhängig für ein Wasserstoffatom oder eine Methylgruppe stehen.

3. Reifen nach einem der vorhergehenden Ansprüche, wobei n für die ganze Zahl 1 steht.

4. Reifen nach einem der vorhergehenden Ansprüche, wobei es sich bei dem polyfunktionellen Acrylatderivat um eine Verbindung der Formel (la) handelt.

5. Reifen nach Anspruch 4, wobei R₄ für eine Ethylgruppe steht.

6. Reifen nach einem der vorhergehenden Ansprüche, wobei die Menge an polyfunktionellem Acrylatderivat in der Zusammensetzung in einem Bereich von 10 bis 70 phe (Gewichtsteile pro hundert Gewichtsteile Elastomer), vorzugsweise von 10 bis 60 phe, liegt.

7. Reifen nach einem der vorhergehenden Ansprüche, wobei die Menge an Peroxid in der Zusammensetzung kleiner oder gleich 3 phe ist.

8. Reifen nach einem der vorhergehenden Ansprüche, wobei das Verhältnis des Gehalts an polyfunktionellem Acrylderivat zum Gehalt an Peroxid größer oder gleich 7, vorzugsweise größer oder gleich 8 und weiter bevorzugt größer oder gleich 10 ist.

9. Reifen nach einem der vorhergehenden Ansprüche, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

10. Reifen nach einem der vorhergehenden Ansprüche, wobei die Zusammensetzung weniger als 50 phe verstärkenden Füllstoff umfasst.

11. Reifen nach einem der vorhergehenden Ansprüche, wobei es sich bei dem verstärkenden Füllstoff um Ruß, Kieselsäure oder eine Mischung davon handelt.

12. Reifen nach einem der vorhergehenden Ansprüche, wobei das Verhältnis des Gesamtgehalts an Füllstoff und des Gehalts an polyfunktionellem Acrylatderivat kleiner oder gleich 3,5, vorzugsweise kleiner oder gleich 3, ist.

13. Reifen nach einem der vorhergehenden Ansprüche, wobei die Zusammensetzung keinen molekularen Schwefel und keinen Schwefeldonor als Vulkanisationsmittel enthält oder weniger als 0,5 phe davon enthält.

14. Reifen nach einem der vorhergehenden Ansprüche, wobei die Zusammensetzung außerdem einen Weichmacher umfasst, der vorzugsweise aus weichmachenden Harzen, Streckölen und Mischungen davon ausgewählt ist.

15. Reifen nach einem der vorhergehenden Ansprüche, wobei es sich bei der Zusammensetzung gemäß den Ansprüchen 1 bis 14 um die Zusammensetzung der Lauffläche oder einer inneren Schicht des Reifens handelt.

## Claims

1. Tyre comprising a rubber composition based on at least one diene elastomer, a reinforcing filler, a polyfunctional acrylate derivative of formula (Ia) or (Ib): 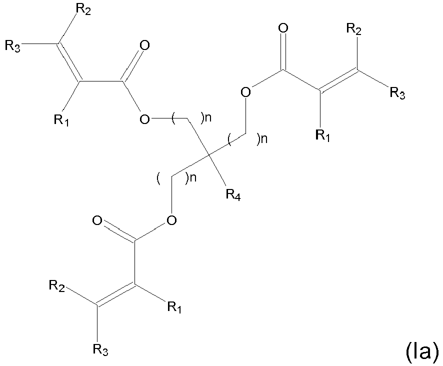 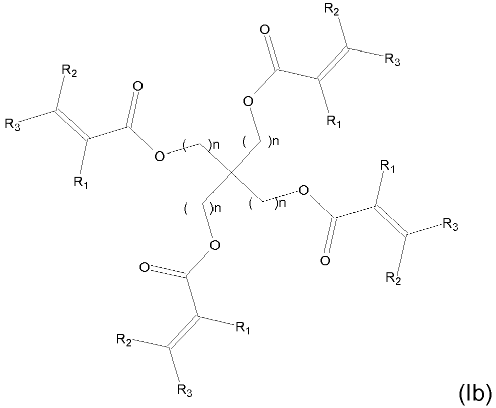 in which R₁, R₂ and R₃ independently represent a hydrogen atom or a C₁-C₇ hydrocarbon group selected from the group consisting of linear, branched or cyclic alkyls, aralkyl groups, alkylaryl groups and aryl groups and optionally interrupted by one or more heteroatoms, it being possible for R₂ and R₃ to together form a nonaromatic ring, n represents an integer having the value 1, 2 or 3 and, in the case of a polyfunctional acrylate derivative of formula (Ia), R₄ represents a radical selected from the group consisting of a hydrogen atom, a methyl group, an ethyl group, a propyl group or an isopropyl group,
said composition additionally comprising a peroxide, the contents of polyfunctional acrylate derivative and of peroxide being such that the ratio of the content of polyfunctional acrylate derivative to the content of peroxide is greater than or equal to 6.

2. Tyre according to Claim 1, wherein R₁, R₂ and R₃ independently represent a hydrogen atom or a methyl group.

3. Tyre according to any one of the preceding claims, wherein n represents the integer 1.

4. Tyre according to any one of the preceding claims, wherein the polyfunctional acrylate derivative is a compound of formula (Ia).

5. Tyre according to Claim 4, wherein R₄ represents an ethyl group.

6. Tyre according to any one of the preceding claims, wherein the amount of polyfunctional acrylate derivative in the composition is within a range extending from 10 to 70 phr (parts by weight per hundred parts by weight of elastomer), preferably from 10 to 60 phr.

7. Tyre according to any one of the preceding claims, wherein the amount of peroxide in the composition is less than or equal to 3 phr.

8. Tyre according to any one of the preceding claims, wherein the ratio of the content of polyfunctional acrylate derivative to the content of peroxide is greater than or equal to 7, preferably greater than or equal to 8 and more preferably greater than or equal to 10.

9. Tyre according to any one of the preceding claims, wherein the diene elastomer is selected from the group consisting of polybutadienes, synthetic polyisoprenes, natural rubber, butadiene copolymers, isoprene copolymers and the mixtures of these elastomers.

10. Tyre according to any one of the preceding claims, wherein the composition comprises less than 50 phr of reinforcing filler.

11. Tyre according to any one of the preceding claims, wherein the reinforcing filler is carbon black, silica or a mixture of thereof.

12. Tyre according to any one of the preceding claims, wherein the ratio of the content of filler to the content of polyfunctional acrylate derivative is less than or equal to 3.5, preferably less than or equal to 3.

13. Tyre according to any one of the preceding claims, wherein the composition does not contain molecular sulphur or a sulphur-donating agent as vulcanization agent or contains less than 0.5 phr thereof.

14. Tyre according to one of the preceding claims, wherein the composition additionally comprises a plasticizer preferably chosen from plasticizing resins, extending oils and their mixtures.

15. Tyre according to one of the preceding claims, wherein the composition as specified in Claims 1 to 14 is that of the tread or of an internal layer of said tyre.
